# EUROPEAN PATENT SPECIFICATION

(11) **EP 0 881 129 B1**
(45) Date of publication and mention of the grant of the patent: **30.10.2002**
(21) Application number: 98303025.5
(22) Date of filing: 17.04.1998
(51) Int. Cl.: B60R 21/20

(54) **Means for attaching an airbag cover**
Mittel zur Befestigung einer Airbagabdeckung
Moyen de fixation d'un couvercle de sac de sécurité gonflable

(30) Priority: 17.04.1997 GB 9707774
(43) Date of publication of application: 02.12.1998
(73) Proprietor: BREED AUTOMOTIVE TECHNOLOGY, INC., Lakeland, FL 33807-3050 (US)
(72) Inventor: Ross, Hubert René, 61400 Oberursel (DE); Zirfas. Hans Peter, 60439 Frankfurt /Main (DE)
(74) Representative: Freeman, Jacqueline Carol

(56) References cited:
- EP-A- 0 618 110
- DE-A- 4 128 945
- DE-A- 4 307 417
- DE-A- 19 516 255
- US-A- 5 472 228

## Description

The present invention relates to an arrangement for attaching an airbag door or cover to the airbag housing and is particularly but not exclusively relevant to an attachment arrangement for a driver's side airbag door for a vehicle safety restraint.

An airbag door is generally formed of a hard plastics material. It serves the function of protecting the uninflated airbag, and other components of the airbag module, from the ingress of dirt and moisture and from damage. The door must blend in with the panel in which it is set. In the case of the driver's side this will usually be the steering wheel hub and in the case of the passenger side this will be the instrument panel. On deployment of the airbag in a crash situation, the door must open easily and quickly and avoid interfering with the airbag. In addition no loose projectiles should be formed since these could themselves injure the vehicle occupant. Similarly the door must not itself for, a dangerous projectile.

It is known to form airbag doors by providing weakened tear lines in the substrate of the material covering the airbag so that on deployment flaps are opened through which the airbag inflates. This arrangement prevents loose projectiles being formed but the tear lines can be unsightly in the vehicle.

EP 618 110 A discloses a catch for attaching an airbag door to a mounting in a vehicle, comprising: a block of moulded plastics material having a main portion fixed to an airbag door and secured thereon, and having a surface for receiving a mounting flange from the vehicle mounting, a latching portion, integral with the main portion and connected thereto.

It is an object of the invention to provide an improved airbag door.

According to the present invention there is provided a catch (5,6) for attaching an airbag door (1) to a mounting in a vehicle, the catch comprising:
a block (5,6) of moulded plastics material having
a main portion (12) fixed to an airbag door (1) and secured thereon, and having a surface for receiving a mounting flange (17) from the vehicle mounting,
a latching portion (13), integral with the main portion (12) and connected thereto by a breakable thin webbing (14) at one end region, characterised by a relatively bendable thicker portion (15) at the other end region of the latching portion (13),
the latching portion (13) having a surface spaced from the receiving surface of the main portion (12) so as to form a groove between the two surfaces for receiving the mounting flange (17).

The mounting flange may be part of the vehicle itself, for example the instrument panel, or may be a part fixed thereto, such as a housing for an airbag.

Preferably several such catches are provided spaced around the edge region of an airbag door. A hinge or a tether is however preferably provided on at least one side of the door to retain the door on deployment of the airbag.

The invention has the advantage of providing an easy to assemble arrangement which provides for quick release of the door without any loose parts on deployment of the airbag. No screws or bolts or rivets are needed to attach the door to the vehicle and thus a saving in cost and assembly time is achieved. The catch is formed integrally with the door in a moulding process and thus is cheap to produce and can be tailored to suit the individual door designs necessary for different vehicles.

In addition, this particular construction allows for a horn switch to be easily and relatively cheaply fitted into the steering wheel despite the airbag presence, since the door can be moved to activate the horn switch. It also provides visible evidence of the airbag door has been tampered with or has opened in response to airbag deployment.

Each catch is preferably in the form of an elongate block which extends over a predetermined length of the mounting flange edge.

In one embodiment the webbing connects the latching portion to the main portion along the whole length of the block. In another embodiment the webbing only connects the two portions along part of the length of the block.

A particularly preferred embodiment provides for the bendable connection between the main and latching portions to have an arcuate interface to provide a ramp function to absorb some of the shearing forces on airbag deployment.

For a better understanding of the present invention and to show how the same may be carried into effect, reference will now be made to the accompanying drawings in which:
Figure 1 is an underside view of a driver's side airbag door incorporating an attachment according to the invention;
Figure 2 is a perspective view of the airbag door of Figure 1;
Figure 3 is a cross-section along line III-III in Figure 1;
Figure 4 is a cross-section along line IV-IV of Figure 1;
Figure 5 is a cross-section along line V-V of Figure 1.
Figure 6 is a partial cross-section, partial perspective view of an attachment arrangement according to the invention
Figure 7 is a schematic cross-section of the attachment arrangement according to the invention, looking in the direction VII in Figure 5.

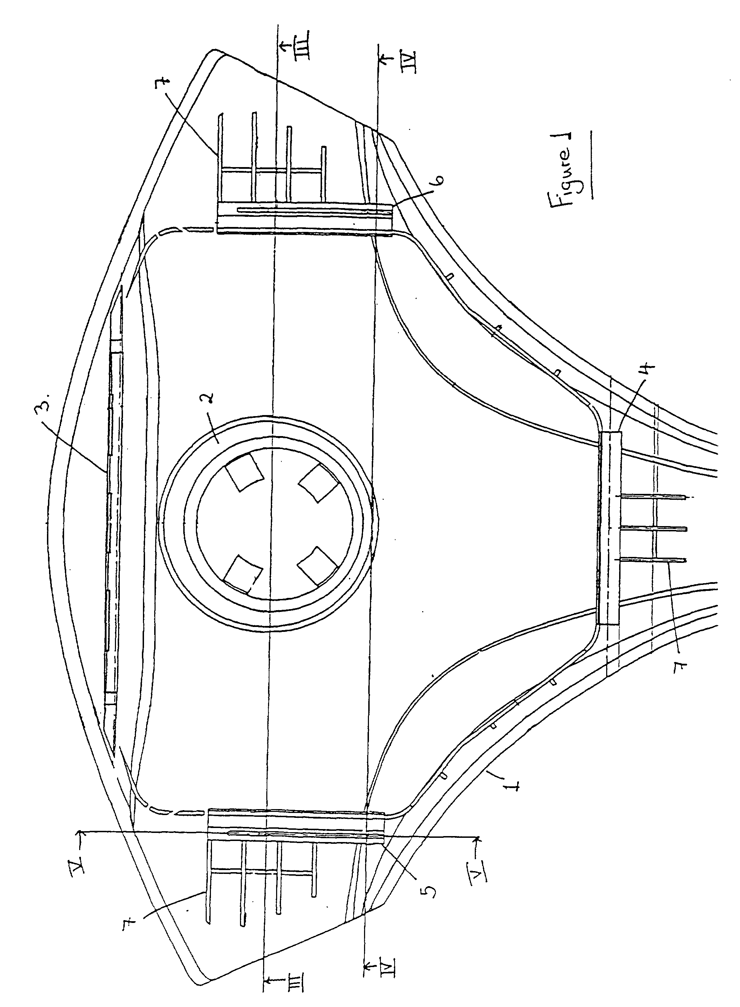

In Figure 1 the underside of an airbag cover door 1 is shown. This airbag cover door fits snugly in the hug of a steering wheel to protect an airbag module from ingress of dirt and moisture and to protect it from physical damage prior to deployment. The portion 2 is a depression in the middle of the door to receive a manufacturer's logo or identification or other similar item. Towards the upper edge (as shown in the Figure) of the door 1 is shown a hinge receiving flange 3. This comprises openings to receive tabs on an airbag housing and is the subject of a separate application by the applicant filed under the number GB 96 07 204.6 and published as GB 23 11 757 A.

On the opposite side of the door 1, a locking block 4 is shown which is of a simple construction comprising a deep groove on one side into which the airbag housing mounting flange is retained. The deep groove effectively splits the mounting block 4 in two parts except for connection along a thin line (or along small lengths separated by gaps along the length of the locking block. On deployment of the airbag this locking block splits along this thin connection line. The split off portion of the locking block is retained under the airbag housing flange and does not become a loose projectile in the vehicle.

On the other two sides of the door 1 are locking catch arrangements in accordance with the invention. These are labelled 5 and 6. They will be described in further detail in relation to the other Figures.

All of the attachments 3, 4, 5 and 6 are formed integrally with the airbag door. The catches 4, 5 and 6 are reinforced with integral fins 7.

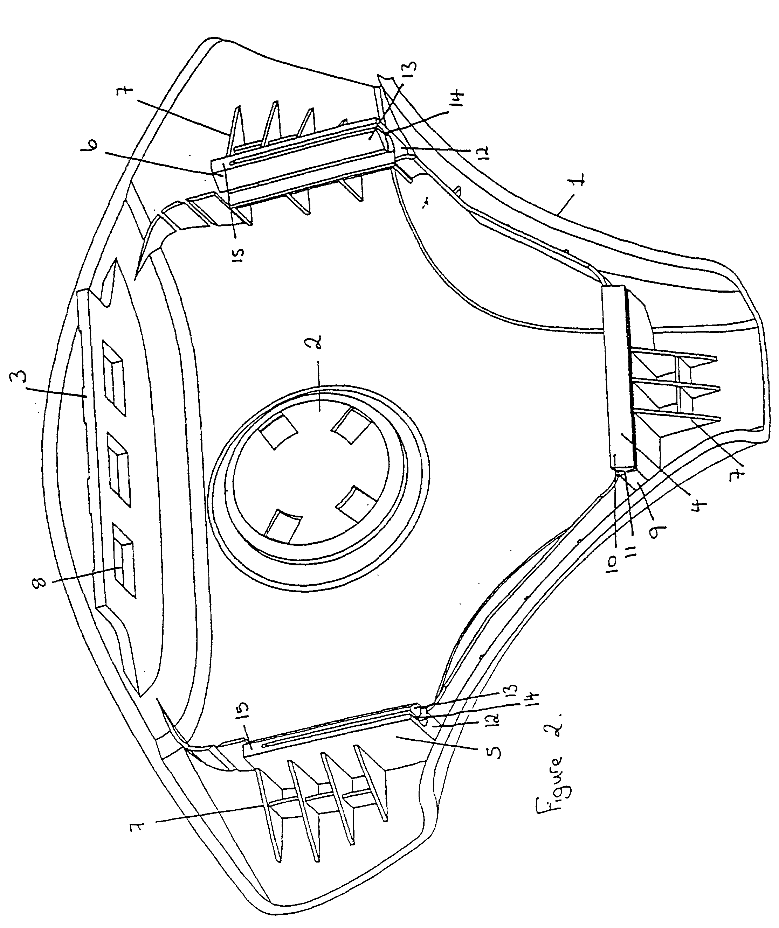

In Figure 2 like parts are denoted by like reference numerals and the construction of the locking arrangements can be seen more clearly. The hinge attachment 3 can be seen to have locking holes 8. The locking block 4 has a two-part construction with a lower portion 9 and an upper portion 10 joined by a thin web of material 11. The web need not extend across the whole length of the locking block 4 but may be broken in places.

The locking blocks 5 and 6 can be seen to have an innovative construction. A main part 12 rises from the inside surface of the door 1 and is strengthened by integral fins 7. An upper latching portion 13 of the locking blocks 5 and 6 is formed integrally with the main portion 12 and is attached along a thin webbing line 14 (which again need not be continuous) and at one end by a thicker and less fracturable portion 15. Between the latching portion 13 and the main portion 12 is formed a groove extending along the length of the locking block and facing towards the inside of the airbag door. This groove receives the mounting flange of the airbag housing.

On deployment of the airbag as the door is forced away from the airbag housing, the upper portion 13 of the locking blocks 5 and 6 shears off at the webbing but remains attached to the main part 12 by the thick portion 15. Some shearing of the connection in the area of 15 is inevitable under certain conditions and in fact can be advantageous in that the shearing will absorb and damp out some of the very large forces involved. Nonetheless the latching portion 13 of the locking blocks 5 and 6 will always remain attached to the airbag door 1 and will thus not become a dangerous loose projectile.

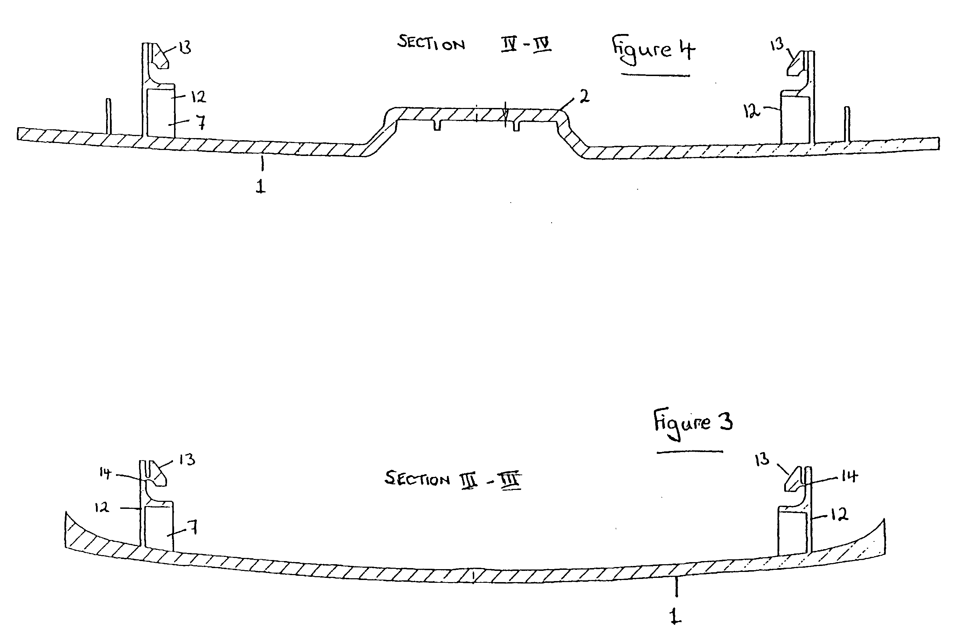

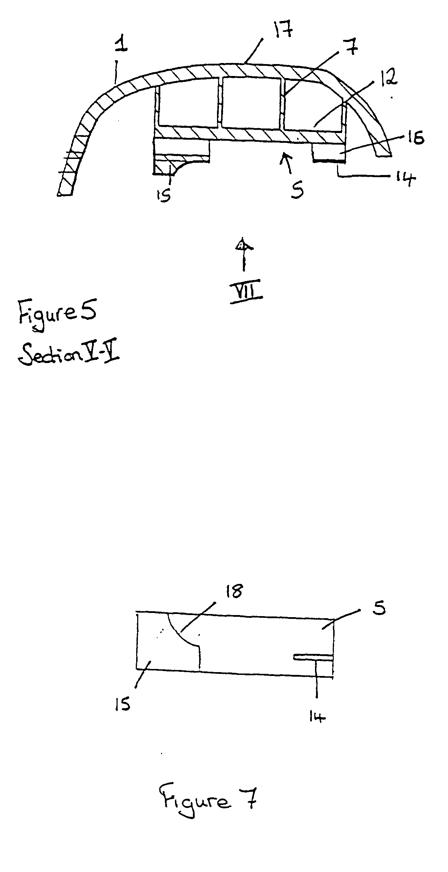

Figures 3 and 4 show cross-sections of the door 1. In Figure 3 the cross-section is taken along line III-III and illustrates a position in which the webbing 14 joins the latching portion 13 to the main portion 12. Figure 4 is a cross-section along line IV-IV and shows a point at which the latching part 13 is not joined to the main part 12.

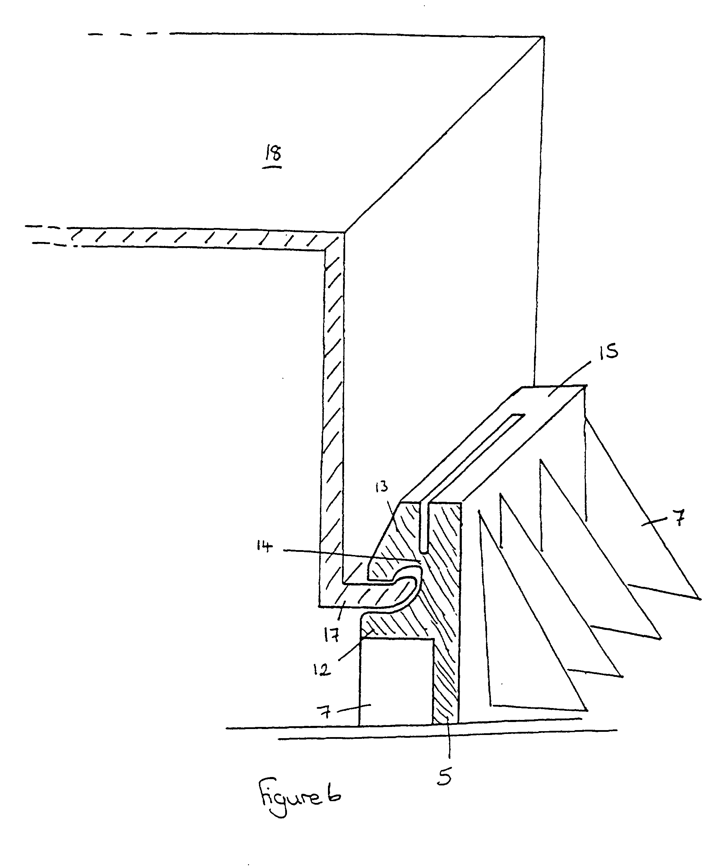

Figure 5 illustrates a vertical section along line V-V of Figure 1. Effectively this shows inside fins 7 supporting the main latching portion 12 and the groove 16 which separates the main portion from the latching portion (not shown due to where the cross-section is taken in Figure 5) and which accommodates the mounting flange of the airbag housing. The narrow webbing join 14 by which the latching portion is joined to the main portion is shown as is the thicker portion 15 at one end. It will be understood that the surface 17 is the lower surface of the airbag door as shown in Figures 1 to 4 and that this is the surface which faces the vehicle driver when the airbag door is installed in the steering wheel of a vehicle.

Figure 7 is a view of the locking block looking in the direction of arrow VII of Figure 5 and illustrates clearly the relative sizes of the joins, i.e. the narrow webbing portion 14 and the thicker portion 15 which as an arcuate joining line 18. Typically the webbing 14 would be ½ mm thick and 8mm long. It has been found that this gives a suitable deployment time having regard to the speed with which this webbing tears and also taking into account the requirement for the airbag door to be securely retained by the airbag housing when the airbag is not deployed.

Figure 6 illustrates the locking block in more detail and shows how a mounting flange 17 of an airbag housing 18 fits in the groove between the main part 12 and the latching part 13 of locking block 5.

## Claims

1. A catch (5,6) for attaching an airbag door (1) to a mounting in a vehicle, comprising:
a block (5,6) of moulded plastics material having
a main portion (12) fixed to an airbag door (1) and secured thereon, and having a surface for receiving a mounting flange (17) from the vehicle mounting,
a latching portion (13), integral with the main portion (12) and connected thereto **characterised by** the connection comprising a breakable thin webbing (14) at one end region, and a relatively bendable thicker portion (15) at the other end region of the latching portion (13),
the latching portion (13) having a surface spaced from the receiving surface of the main portion (12) so as to form a groove between the two surfaces for receiving the mounting flange (17).

2. A catch according to claim 1, wherein the catch is formed integrally with the airbag door (1) in a moulding process.

3. A catch according to any one of claims 1 or 2, wherein the catch is in the form of an elongate block which extends over a predetermined length of the mounting flange edge.

4. A catch according to any one of claims 1 to 3, wherein the webbing (14,15) connects the latching portion to the main portion along the whole length of the block (5,6).

5. A catch according to any one of claims 1 to 3, wherein the webbing (14,15) connects the two portions along only a portion of the length of the block (5,6).

6. A catch according to any preceding claim wherein the bendable connection (13) between the main (12) and the latching portion (13) has an arcuate interface to provide a ramp function to absorb some of the shearing forces on airbag deployment.

7. A airbag door arrangement comprising an airbag door (1) and a catch according to any one of claims 1 to 6.

8. An airbag door arrangement according to claim 7 comprising a plurality of such catches spaced around the edge region of the door (1).

9. An airbag door arrangement according to claim 8 comprising a tether on at least one side of the door (1) to retain the door (1) on deployment of the airbag.

10. An airbag door arrangement according to claim 7, 8 or 9 further comprising a horn switch activatable by movement of the door.

11. A vehicle comprising an airbag door (1) arrangement according to claim 7 and a mounting flange (17).

12. A vehicle according to claim 11 wherein the mounting flange (17) is an integral part of the vehicle itself.

13. A vehicle according to claim 11 wherein the mounting flange (17) is an integral part of the instrument panel.

14. A vehicle according to claim 11 wherein the mounting flange (17) is an integral part of a housing (18) for an airbag.

## Patentansprüche

1. Anschlag (5, 6) für die Anbringung einer Airbag-Abdeckung (1) an einer Halterung in einem Fahrzeug, wobei der Anschlag folgendes aufweist:
einen Block (5, 6) aus geformtem Kunststoffmaterial mit
einem Hauptabschnitt (12), der an einer Airbag-Abdeckung (1) angebracht und daran befestigt ist und der eine Oberfläche für die Aufnahme eines Befestigungsflanschs (17) von der Halterung des Fahrzeugs hat,
einen Verriegelungsabschnitt (13), der mit dem Hauptabschnitt (12) integriert und mit diesem verbunden ist, **gekennzeichnet dadurch daß** die Verbindung einen dünnen, zerbrechlichen Steg (14) an einem Endbereich, und einen verhältnismäßig biegsamen, dickeren Abschnitt (15) am anderen Endbereich des Verriegelungsabschnitts umfaßt (13),
wobei der Verriegelungsabschnitt (13) eine Oberfläche hat, die mit Zwischenraum zu der aufnehmenden Oberfläche des Hauptabschnitts (12) angeordnet ist, um so zwischen den beiden Oberflächen eine Rille für die Aufnahme des Befestigungsflanschs (17) zu bilden.

2. Anschlag nach Anspruch 1, bei dem der Anschlag in einem Preßvorgang integriert mit der Airbag-Abdeckung (1) hergestellt wird.

3. Anschlag nach einem der Ansprüche 1 oder 2, bei dem der Anschlag die Form eines länglichen Blocks hat, der sich über eine vorher festgelegte Länge der Kante des Befestigungsflanschs erstreckt.

4. Anschlag nach einem der Ansprüche 1 bis 3, bei dem der Steg (14, 15) den Verriegelungsabschnitt über die gesamte Länge des Blocks (5, 6) mit dem Hauptabschnitt verbindet.

5. Anschlag nach einem der Ansprüche 1 bis 3, bei dem der Steg (14, 15) die beiden Abschnitte nur über einen Abschnitt der Länge des Blocks (5, 6) verbindet.

6. Anschlag nach einem der vorhergehenden Ansprüche, bei dem die biegsame Verbindung (15) zwischen dem Hauptabschnitt (12) und dem Verriegelungsabschnitt (13) eine gebogene Grenzfläche hat, um eine Rampenfunktion für die Absorption eines Teils der Scherkräfte bei der Entfaltung des Airbags bereitzustellen.

7. Airbag-Abdeckvorrichtung, die eine Airbag-Abdeckung (1) und einen Anschlag nach einem der Ansprüche 1 bis 6 umfaßt.

8. Airbag-Abdeckvorrichtung nach Anspruch 7, die eine Vielzahl solcher Anschläge umfaßt, die mit Zwischenraum um den Randbereich der Abdeckung (1) angeordnet sind.

9. Airbag-Abdeckvorrichtung nach Anspruch 8, die auf wenigstens einer Seite der Abdeckung (1) ein Halteseil aufweist, um die Abdeckung (1) bei der Entfaltung des Airbags zurückzuhalten.

10. Airbag-Abdeckvorrichtung nach Anspruch 7, 8 oder 9, die außerdem einen Hupenschalter aufweist, der durch die Bewegung der Abdeckung aktiviert werden kann.

11. Fahrzeug, das eine Anordnung einer Airbag-Abdeckung (1) nach Anspruch 7 und einen Befestigongsflansch (17) aufweist.

12. Fahrzeug nach Anspruch 11, bei dem der Befestigungsflansch (17) ein integrierter Bestandteil des eigentlichen Fahrzeugs ist.

13. Fahrzeug nach Anspruch 11, bei dem der Befestigungsflansch (17) ein integrierter Bestandteil des Instrumentenbretts ist.

14. Fahrzeug nach Anspruch 11, bei dem der Befestigungsflansch (17) ein integrierter Bestandteil eines Gehäuses (18) für einen Airbag ist.

## Revendications

1. Cliquet (5, 6) servant à fixer une porte de coussin d'air (1) à un support dans un véhicule, le cliquet comprenant:
un bloc (5,6) composé d'un matériau plastique moulé comportant
une partie principale (12) fixée à une porte de coussin d'air (1) et retenue sur celle-ci, et comportant une surface destinée à recevoir une bride de montage (17) du support du véhicule,
une partie de verrouillage (13), faisant partie intégrante de la partie principale (12) et raccordée à cellé-ci, **caractérisé en ce que** le raccord comprend une fine sangle cassable (14) au niveau d'une région d'extrémité, et une partie plus épaisse à flexion relative (15) au niveau de l'autre région d'extrémité de la partie de verrouillage (13),
la partie de verrouillage (13) comportant une surface espacée de la surface de réception de la partie principale (12) de sorte à former une rainure entre les deux surfaces pour recevoir la bride de montage (17).

2. Cliquet selon la revendication 1, le cliquet étant formé d'une seule pièce avec la porte du coussin d'air (1) dans le cadre d'un procédé de moulage.

3. Cliquet selon l'une quelconque des revendications 1 ou 2, le cliquet ayant la forme d'un bloc allongé s'étendant au-delà d'une longueur prédéterminée du bord de la bride de montage.

4. Cliquet selon l'une quelconque des revendications 1 à 3, dans lequel la sangle (14, 15) relie la partie de verrouillage à la partie principale le long de l'ensemble de la longueur du bloc (5, 6).

5. Cliquet selon l'une quelconque des revendications 1 à 3, dans lequel la sangle (14, 15) relie les deux parties uniquement le long d'une partie de la longueur du bloc (5, 6).

6. Cliquet selon l'une quelconque des revendications précédentes, dans lequel la liaison à flexion (15) entre la partie principale (12) et la partie de verrouillage (13) comporte une interface arquée pour établir une fonction de rampe destinée à absorber certaines des forces de cisaillement accompagnant le déploiement du coussin d'air.

7. Agencement de porte de coussin d'air comprenant une porte de coussin d'air (1) et un cliquet selon l'une quelconque des revendications 1 à 6.

8. Agencement de porte de coussin d'air selon la revendication 7, comprenant plusieurs cliquets de ce type espacés autour de la région de bordure de la porte (1).

9. Agencement de porte de coussin d'air selon la revendication 8, comprenant un câble d'attache sur au moins un côté de la porte (1) pour retenir la porte (1) lors du déploiement du coussin d'air.

10. Agencement de porte de coussin d'air selon les revendications 7, 8 ou 9, comprenant en outre un interrupteur de klaxon pouvant être actionné par l'intermédiaire d'un déplacement de la porte.

11. Véhicule comprenant un agencement de porte de coussin d'air (1) selon la revendication 7 et une bide de montage (17).

12. Véhicule selon la revendication 11, dans lequel la bride de montage (17) fait partie intégrante du véhicule même.

13. Véhicule selon la revendication 11, dans lequel la bride de montage (17) fait partie intégrante du tableau de bord.

14. Véhicule selon la revendication 11, dans lequel la bride de montage (17) fait partie intégrante d'un boîtier (18) d'un coussin d'air.
